Europäisches Patentamt

**European Patent Office**

**Office européen des brevets**

(11) Numéro de publication: **0 021 963**
**A1**

## (12) DEMANDE DE BREVET EUROPEEN

(21) Numéro de dépôt: **80400860.5**

(22) Date de dépôt: **13.06.80**

(51) Int. Cl.³: **A 01 G 9/10**

(30) Priorité: **15.06.79 FR 7915341**

(43) Date de publication de la demande:
**07.01.81 Bulletin 81/1**

(84) Etats Contractants Désignés:
**AT BE CH DE FR GB IT LI LU NL SE**

(71) Demandeur: **TECHNIFLORE**
**5bis rue d'Ablon**
**F-91200 Athis-Mons, Essonne(FR)**

(72) Inventeur: **See, Jacques Léon Alexandre**
**16A, rue Jean Mermoz**
**Deauville, Calvados(FR)**

(72) Inventeur: **Lemaire, René-François**
**33 rue des Vinaigriers**
**Paris(FR)**

(74) Mandataire: **Lepeudry-Gautherat, Thérèse et al,**
**Cabinet Armengaud Jeune Casanova, Akerman,**
**Lepeudry**
**23 boulevard de Strasbourg F-75010 Paris(FR)**

(54) **Pot destiné au marcottage aérien de végétaux.**

(57) Pot pour le marcottage de branches du type comprenant deux parties 2 et 3 réunies par une charnière 4. Deux demi-fonds 11 et 12 comprennent une encoche centrale et les deux encoches situées en regard l'une de l'autre constituent une ouverture 5 pour le passage de la branche A.

Après avoir rapproché les deux parties 2 et 3 et les avoir solidariser au moyen d'un rebord arrondi 10 engagé dans une fente 8, la branche A traverse l'ouverture 5 et se trouve insérée élastiquement entre deux éléments radiaux 6 et 7 qui, ainsi, constituent un second passage pour la branche B, en regard de l'ouverture 5. Ainsi, le pot est garanti contre tout basculement accidentel.

Fig.1

# Pot destiné au marcottage aérien de végétaux

On sait que l'opération de marcottage consiste à provoquer la formation de racines sur une branche afin de constituer un plant qui sera mis en terre après avoir coupé la branche au-dessous des racines.

Le marcottage de branches souples ou situées assez près du sol est bien connu et il n'est pas nécessaire de rappeler ici les différentes méthodes utilisées.

Le marcottage aérien, quant à lui, consiste à maintenir de la terre autour d'une branche dont on a retiré une fraction de l'écorce, ce qui pose des problèmes difficiles.

On connaît, par exemple, le brevet français n° 1 319 409 qui décrit un pot pour le marcottage aérien qui comprend des fractions susceptibles d'être rapprochées et reliées l'une à l'autre, le fond laissant subsister une ouverture pour le passage de la branche à marcotter.

Ce pot présente des avantages marqués par rapport aux méthodes traditionnelles car il permet de disposer d'une quantité de terre relativement importante, d'autoriser l'arrosage et même de prévoir une réserve d'humidité.

En revanche, il ne présente aucune stabilité et ne permet le marcottage que de branches parfaitement verticales.

En effet, la moindre obliquité d'une branche provoque l'inclinaison latérale irréversible du pot dès que le vent balance la branche car il se produit sur la terre meuble des efforts radiaux importants.

La présente invention remédie principalement à cet inconvénient en permettant de réaliser un pot de marcottage parfaitement stable même par grand vent et, en outre, permet le marcottage de branches ayant toutes les inclinaisons depuis la verticale jusqu'à l'horizontale et donc y compris oblique.

A cet effet, le pot selon l'invention destiné au marcottage aérien de végétaux, du type comprenant un corps creux constitué d'au moins deux parties assemblables et éventuellement reliées l'une à l'autre afin de pouvoir être rapprochées et réunies en laissant subsister entre elles au moins une ouverture pour le passage d'une branche d'un végétal se caractérise en ce qu'il comprend, en plus de ladite

2

ouverture, deux éléments au moins susceptibles de coopérer par rapprochement, soit pour contribuer à l'assemblage de parties du pot, soit pour déterminer une ouverture pour le passage d'une branche d'un végétal déjà engagé dans la première ouverture.

L'invention sera bien comprise par la description détaillée ci-après faite en référence au dessin annexé. Bien entendu, la description et le dessin ne sont donnés qu'à titre d'exemple indicatif et non limitatif.

La figure 1 est une vue schématique d'un pot de marcottage conforme à l'invention selon un premier mode de réalisation.

La figure 2 est une vue en perspective montrant deux cuvettes demi-circulaires susceptibles d'être associées à un pot de marcottage du type représenté sur la figure 1.

La figure 3 est une vue schématique d'un pot de marcottage selon un deuxième mode de réalisation de l'invention présenté à plat, tel qu'il peut être moulé en une seule pièce d'une matière synthétique.

Les figures 4, 5 et 6 sont des vues schématiques montrant un pot de marcottage du type de celui représenté sur la figure 3 et associé à des branches de végétaux verticales, obliques et horizontales.

La figure 7 est une vue en plan d'un pot de marcottage du même type que celui de la figure 3 mais comprenant une variante.

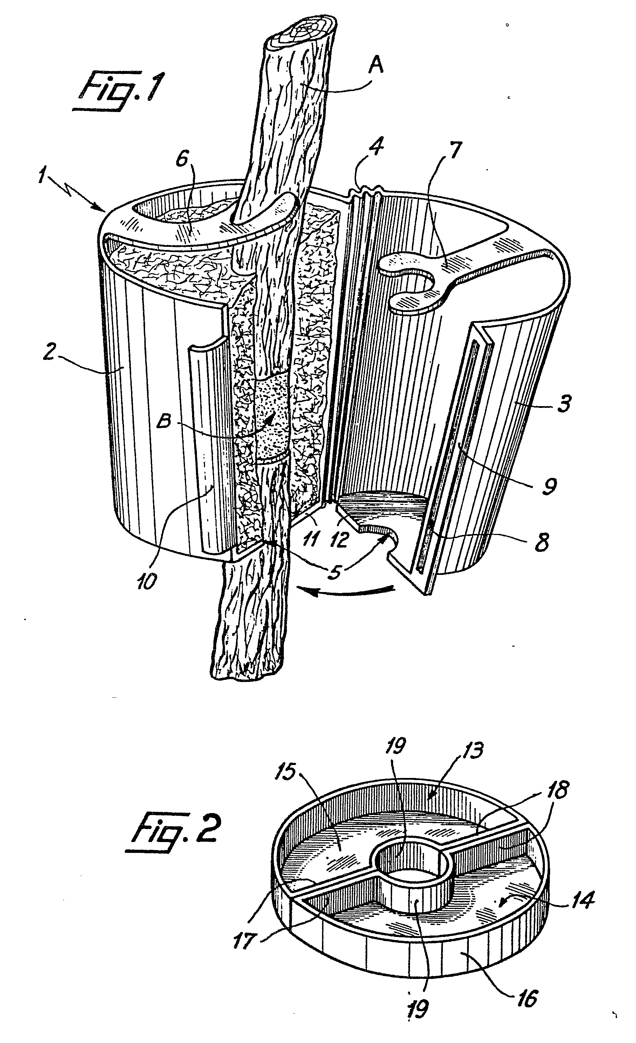

En se reportant à la figure 1, on voit qu'un pot destiné au marcottage aérien de végétaux conforme à l'invention est du type comprenant un corps creux 1 constitué de deux parties assemblables 2 et 3 reliées l'une à l'autre par une charnière 4 de façon à pouvoir être rapprochées et réunies en laissant subsister entre elles au moins une ouverture pour le passage d'une branche d'un végétal A et est caractérisé en ce qu'il comprend en plus de ladite ouverture 5, deux éléments 6 et 7 susceptibles de coopérer par rapprochement avec la branche A et de déterminer une ouverture pour le passage de ladite branche, laquelle est par ailleurs déjà engagée dans l'ouverture 5.

Les bords des parties 2 et 3 sont munis d'organes d'accrochage qui sont constitués d'une fente 8 prévue verticalement dans une patte 9 orientée radialement à l'extérieur de la partie 3 et par un rebord courbe solidaire de la partie 2.

Les parties 2 et 3 comprennent chacune un demi-fond respectivement 11 et 12 qui est entaillé d'une échancrure centrale afin de constituer l'ouverture 5 lorsque les deux parties 2 et 3 seront en position de réunion.

L'utilisation d'un pot de marcottage conforme à l'invention se fait de la façon suivante :

- On commence tout d'abord, ainsi que cela est bien connu, par ôter de l'écorce de la branche A pour dégager une zone B puis, en regard de cette zone B, on place le pot de marcottage conforme à l'invention en prenant soin de placer la branche A dans l'échancrure de l'un des deux demi-fonds soit 11 soit 12. En l'occurrence, sur la figure 1, la branche A a d'abord été engagée dans l'échancrure du demi-fond 11.

- Ensuite, on rapproche la partie 3 de la partie 2 en la faisant pivoter autour de la charnière 4 et en s'assurant que la branche A pénètre bien également dans l'échancrure du demi-fond 12 de sorte que, finalement, la branche A passe par l'ouverture 5 constituée par la coopération des deux échancrures situées en regard l'une de l'autre. On engage, par déformation élastique des parties 2 et 3, le rebord courbe 10 dans la fente 8 ce qui assure la réunion des deux parties 2 et 3.

On s'assure également que, conformément à l'invention, les éléments 6 et 7 sont correctement placés par rapport à la branche A.

En effet, les éléments radiaux 6 et 7 ont des extrémités concaves et se font face pour être en regard de l'ouverture 5. En outre, les éléments radiaux 6 et 7 ont une longueur telle qu'ils doivent s'incliner obliquement, à la manière d'arcs-boutants lorsqu'ils sont placés de part et d'autre de la branche A.

4

Le pot de marcottage étant ainsi mis en place, on y introduit de la terre que l'on traite ensuite de toute manière convenable pour ce qui est de son arrosage, l'apport d'engrais, etc.

On voit que la disposition des éléments radiaux 6 et 7 a deux actions combinées :

- l'effet d'arc-boutant assure qu'en permanence les parties 2 et 3 sont sollicitées dans une position d'écartement qui correspond précisément, à la position de blocage du rebord courbe 10 engagé dans la fente 8.

- En outre, quelles que soient les sollicitations de la branche dues à l'action du vent, le pot reste toujours correctement en place puisqu'il est maintenu par ses deux extrémités opposées, l'extrémité supérieure par les éléments radiaux 6 et 7 et l'extrémité inférieure par son fond.

Il ne peut donc y avoir aucun effet de basculement du pot par rapport à la branche et le pot, au contraire, suit exactement la branche dans tous ses déplacements de sorte qu'il n'y a pratiquement aucun mouvement relatif entre la branche et la terre, ce qui assure le développement correct des racines.

On voit que grâce à l'invention on obtient une assurance que le pot restera en place dans toutes les conditions climatiques possibles et que l'on peut, comme cela était déjà connu, arroser la terre et surveiller le bon déroulement du marcottage.

On voit que d'après le mode de réalisation représenté sur la figure 1, le pot de marcottage conforme à l'invention est constitué de deux moitiés sensiblement en forme de demi-tronc de cône qui peuvent être obtenues en une seule pièce par moulage d'une matière synthétique avec les autres parties décrites : charnière 4, éléments radiaux 6 et 7, fente 8 dans la patte 9, rebord 10, demi-fonds 11 et 12 avec leur échancrure centrale.

Un tel pot est donc facile à fabriquer à un prix de revient relativement faible.

Le pot de marcottage conforme à l'invention peut également comprendre au moins une cuvette destinée à constituer un réservoir d'eau, par exemple, en association avec une nappe spongieuse.

Avec le mode de réalisation représenté sur la figure 1, on peut prévoir deux variantes :

selon une première variante, les bords rectilignes et l'échancrure centrale des demi-fonds 11 et 12, peuvent être munis d'un bord perpendiculaire au plan des demi-fonds, de sorte que l'on constitue ainsi deux demi-cuvettes étanches dans lesquelles l'eau pourra séjourner et qui sera utilisée par la terre au fur et à mesure de ses besoins naturels.

Pour des questions de fabrication, il peut s'avérer plus simple de prévoir, comme cela est représenté sur la figure 2, deux cuvettes indépendantes demi-circulaires 13 et 14 comprenant chacune un fond 15, un bord extérieur courbe 16, deux bords rectilignes 17 et 18 de part et d'autre d'un bord central demi-circulaire 19.

Ces deux cuvettes peuvent aisément être moulées et même être moulées en même temps que l'ensemble du pot de marcottage représenté sur la figure 1, en prévoyant, par exemple, que chacune des deux cuvettes est reliée à une partie des pots de marcottage par une patte que l'on peut aisément casser au moment de l'utilisation du pot.

Les deux cuvettes 13 et 14 sont, naturellement, mises en place dans le fond du pot de marcottage après que les parties 2 et 3 ont été réunies autour de la branche A, comme on l'a décrit ci-dessus, mais avant de placer la terre à l'intérieur du pot.

Grâce au fait que le pot de marcottage qui vient d'être décrit est d'une très grande stabilité, il est possible de l'utiliser pour des branches qui ne sont pas absolument verticales ce qui peut obliger, néanmoins, à placer la terre de telle sorte qu'elle ne coule pas, c'est-à-dire qu'elle ait une pente inférieure à celle dite de "talus naturel". Cette disposition a pour inconvénient de ne pas utiliser toute la capacité du pot de marcottage.

C'est pourquoi on va maintenant décrire une variante de réalisation ; on peut adapter un pot de marcottage conforme à l'invention à toutes les configurations possibles.

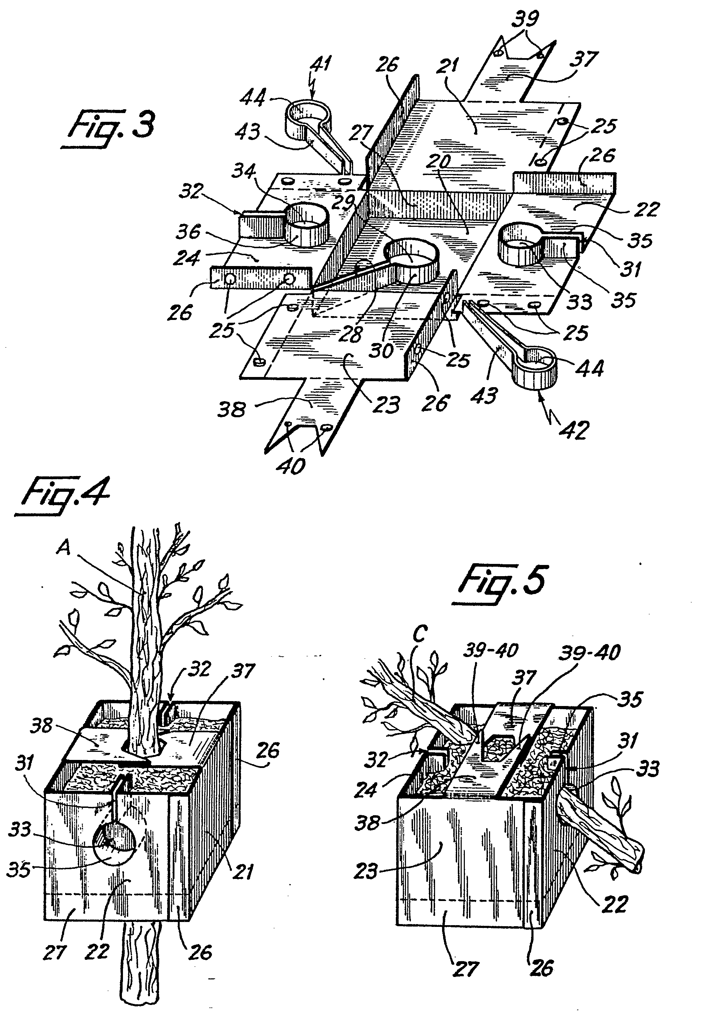

En se reportant à la figure 3, on voit en effet, qu'un pot de marcottage conforme à l'invention, comprend une partie centrale plane, carrée 20, qui est solidaire par chacun de ses bords formant charnière, d'un panneau respectivement 21, 22, 23 et 24 qui est susceptible d'être ramené dans un plan perpendiculaire à celui de la partie centrale 20 lorsqu'on le plie le long de la charnière.

Lorsque les quatre panneaux 21, 22, 23 et 24 sont amenés perpendiculairement au plan de la partie centrale 20, l'ensemble a sensiblement la forme d'un cube à cinq faces c'est-à-dire dont la face supérieure est ouverte.

Les quatre panneaux peuvent être maintenus dans cette position dressée grâce à des organes de tous types connus tels que des boutons à pression 25 qui sont prévus d'une part sur une zone latérale des panneaux et, d'autre part, sur un volet 26 prévu sur chaque panneau perpendiculairement à son plan.

On note que dans le mode de réalisation représenté ici, la partie centrale carrée 20 est entourée par un bord 27 de sorte que la partie centrale constitue une cuvette et que les panneaux 21, 22, 23 et 24 sont reliés aux bords supérieurs de cette cuvette.

Le fond de la cuvette c'est-à-dire la partie centrale 20 proprement dite, ainsi que l'un des quatre angles du bord 27 sont interrompus et constituent une fente 28 qui communique avec un trou circulaire central 29. La fente 28 et le trou central 29 sont entourés par un bord 30 dont la hauteur est sensiblement égale à celle du bord 27 de telle manière que tout l'espace de la cuvette constitue une cavité étanche susceptible de recevoir de l'eau.

Selon le même principe que ce qui vient d'être décrit, on voit que les panneaux 22 et 24 qui sont opposés l'un à l'autre sont également munis d'une fente respectivement 31 et 32 qui communique avec un trou respectivement 33 et 34, un bord respectivement 35 et 36 entourant à la fois la fente et le trou.

Les deux autres panneaux opposés à savoir les panneaux 21 et 23 sont prolongés par des éléments 37 et 38 dont les extrémités sont concaves et qui sont munis d'organes de fixation tels que des boutons à pression 39 et 40

Enfin, on voit que les panneaux 22 et 24 sont solidaires chacun d'une pièce respectivement 41 et 42 qu'il est facile de détacher le long d'une ligne d'affaiblissement comme cela est bien connu en soi.

Chaque pièce 41 et 42 comprend un fond plan et un bord continu qui constituent une partie rectiligne 43 et une partie courbe 44.

L'utilisation du pot de marcottage selon le mode de réalisation qui vient d'être décrit, est le suivant :

l'ensemble représenté sur la figure 3 ayant été moulé en une seule pièce d'une matière synthétique relativement souple, il est possible de déformer la partie centrale 20 pour que les deux côtés de la fente 28 s'écartent l'un vers le haut, l'autre vers le bas de sorte que l'on crée un passage dans lequel il est possible d'insérer la branche que l'on veut marcotter, après avoir retiré une partie de son écorce, comme cela a déjà été décrit plus haut.

Ainsi la branche peut atteindre sans difficulté le trou central 29 et l'on ramène alors les deux côtés de la fente pour qu'ils se retrouvent dans leur position d'origine qui est celle représentée sur la figure 3.

Au préalable, de préférence, on a retiré les pièces 41 et 42 en les cassant le long de la ligne d'affaiblissement prévue à cet effet.

On peut alors redresser l'un après l'autre les
quatre panneaux 21, 22, 23 et 24 que l'on assujettit les
uns aux autres au moyen des organes de fixation qu'ils
possèdent tels que les boutons à pression 25.

On a ainsi constitué un pot de marcottage sensiblement cubique ouvert à sa partie supérieure.

Mais la présence des fentes 31 et 32 et des
trous 33 et 34 constitue des passages par lesquels l'humidité ou même la terre pourrait s'échapper. Pour s'opposer
à ces fuites, on place des pièces 41 et 42 au-dessus des
fentes 31-32 et des trous 33-34 de telle manière que le
bord des pièces 41 et 42 entoure complètement les bords
35 et 36 et que les fonds des pièces 41 et 42 obturent
totalement les passages.

On reconstitue ainsi une étanchéité tout à fait
suffisante pour garantir que ni la terre ni l'eau ne
s'échapperont par ces passages.

On peut alors remplir le pot ainsi constitué
avec de la terre comme cela a été décrit précédemment.

Cet ensemble est représenté sur la figure 4
et l'on voit que l'on obtient ici encore, une très grande
stabilité du pot puisque les éléments radiaux 37 et 38
s'opposent au basculement du pot dans quelque direction
que ce soit.

On voit qu'ici, contrairement au mode de réalisation de la figure 1, des éléments radiaux 37 et 38
ont une longueur telle qu'ils ne prennent pas appui sur
la branche A mais l'entoure avec un faible jeu. Les parties latérales des éléments radiaux 37 et 38 qui entourent
et constituent à la fois la concavité de l'extrémité de
ces éléments peuvent coopérer avec leur homologue de
l'élément situé en regard de telle manière que les boutons à pression 39 et 40 peuvent être assujettis de sorte
que les éléments 37 et 38 sont réunis l'un à l'autre.

Le pot de marcottage est rempli de terre de préférence avant mise en place des éléments 37 et 38.

On voit que selon la figure 4 on peut marcotter une branche A verticale comme cela a été déjà décrit avec le mode de réalisation de la figure 1.

Mais on voit également, en se reportant à la figure 5, que l'on peut disposer le même pot de marcottage sur une branche oblique.

Pour cela, on engage cette branche C dans le trou 33 en écartant les bords de la fente 31 de la même manière que pour la partie centrale 20 comme on l'a décrit en regard de la figure 3.

On redresse les panneaux pour constituer le cube comme cela a été décrit et l'on place la pièce 41, par exemple, au-dessus de la fente 28 et du trou 29 du fond tandis que l'on place la pièce 42 par dessus la fente 32 et le trou 34 situés sur le panneau vertical 24.

On a de la sorte reconstitué l'étanchéité nécessaire et l'on remplit le pot ainsi constitué avec de la terre puis l'on assujettit les éléments radiaux 37 et 38 au moyen d'organes à pression 39 et 40, la branche C passant obliquement dans le trou 33 et débouchant par dessus le bord supérieur du panneau redressé 24.

On note deux caractéristiques de ce montage :

- la fente 31 et le trou 33 ne sont pas positivement obturés mais la dimension de la branche C est un garant suffisant que la terre ne pourra pas s'échapper en quantité importante. L'eau, quant à elle, est en principe dans la partie basse de la masse de terre et essentiellement dans la cuvette du fond 20 ;

- le pot de marcottage ne peut pas basculer car on a pris soin de prévoir les trous 33 et 34 sur les panneaux opposés à ceux qui portent les éléments radiaux 37 et 38 de sorte que ceux-ci se trouvent par dessus la terre et la branche C et empêchent un basculement qui, par rapport à la figure 5, consisterait pour le pot de marcottage à s'abaisser vers la gauche.

En outre, on a prévu les trous 33 et 34 à une hauteur telle par rapport au fond du cube que la masse
de terre se trouve en majorité au-dessous du niveau de
ces trous et constitue une sorte de lest obligeant le pot
à rester dans la position représentée c'est-à-dire s'opposant radicalement à son basculement latéral c'est-à-dire
sensiblement autour de l'axe de la branche C.

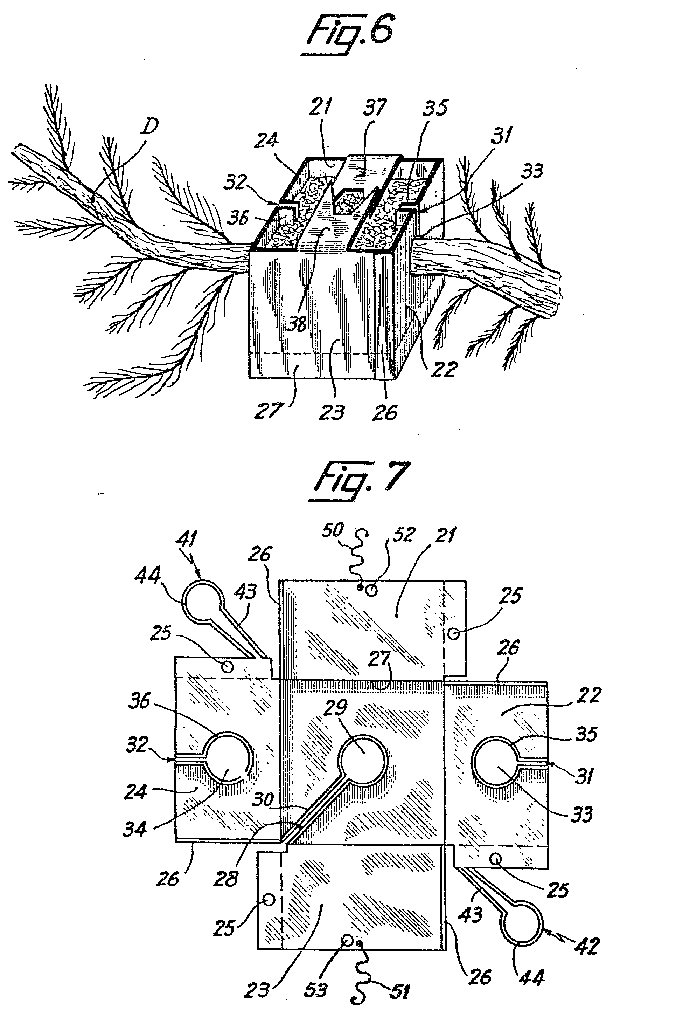

En se reportant maintenant à la figure 6, on
voit que le même pot de marcottage peut être placé autour
d'une branche D tout à fait horizontale.

La mise en place du pot autour d'une telle
branche se fait en écartant les côtés de la fente 31
d'abord puis les bords de la fente 32, les panneaux 22
et 24 étant redressés par rapport à la partie centrale.

On redresse ensuite les panneaux 21 et 23 et
on assujettit tous les panneaux au moyen d'organes tels
que les boutons à pression 25.

On place une seule des deux pièces 41 ou 42 sur
la fente 28 et le trou 29 l'autre pièce étant inutile,
puis on remplit le pot de terre et enfin on assujettit
les éléments radiaux 37 et 38.

On voit que le pot ne peut pas basculer vers
la gauche ou vers la droite de la figure 6 puisque la
branche D est engagée à la fois dans le trou 33 et dans
le trou 34 et que le pot ne peut pas non plus basculer
sensiblement autour de l'axe de la branche D du fait que
la terre constitue un lest comme on l'a dit ci-dessus.

En se reportant maintenant à la figure 7, on
voit en plan un ensemble correspondant à celui qui est
représenté sur la figure 3 mais qui comporte une variante
et que l'on va maintenant décrire, les mêmes références
représentant les mêmes éléments que ceux déjà décrits plus
haut.

Les panneaux 21 et 23 au lieu de comprendre des
éléments radiaux 37 et 38 qui sont par nature relativement
rigides, comprennent des éléments respectivement 50 et 51
qui, s'ils sont réalisés en matière synthétique moulée,
sont avantageusement ondulés comme schématiquement représenté afin d'être relativement élastiques.

Ainsi, après la mise en place du pot comme on l'a décrit en regard des figures 4 à 6, les éléments 50 et 51 peuvent coopérer l'un avec l'autre en les entremêlant ou en les accrochant plus simplement l'un à l'autre et au besoin autour de la branche A.

Les ondulations des éléments 50 et 51 constituent donc à la fois un moyen de les rendre extensibles et des organes pour leur accrochage.

Les mêmes organes 50 et 51 tels qu'ils sont représentés peuvent coopérer non plus l'un avec l'autre mais avec une contrepartie respectivement 52 et 53 prévue sur le panneau opposé.

Ainsi l'élément 50 doit coopérer avec la contrepartie 53 tandis que l'élément 51 doit coopérer avec la contrepartie 52.

On obtient donc ici la solidarisation des éléments 50 et 51 qui contribuent à la solidité de l'ensemble puisqu'ils empêchent l'écartement accidentel des panneaux 21 et 23 ce qui entraîne l'immobilisation des panneaux 22 et 24, puisque chaque panneau est relié à son voisin.

Avec ce mode de réalisation les éléments 50 et 51 travaillent de la même manière que les éléments 37 et 38 c'est-à-dire qu'ils opèrent par traction tandis qu'avec le mode de réalisation représenté sur la figure 1 les éléments 6 et 7 travaillaient par poussée et l'on voit que dans chaque cas l'action permanente des éléments 6 et 7 d'une part, 37, 38 et 50 et 51 d'autre part, se fait toujours dans le sens qui favorise le maintien des parties assemblables du pot et non pas dans le sens inverse qui serait une sollicitation vers une ouverture du pot et une désolidarisation des parties assemblées.

L'invention n'est pas limitée aux seuls modes de réalisation décrits et représentés mais en embrasse au contraire toutes les variantes.

En particulier, on a représenté sur la figure 1 une charnière 4 qui est formée par une membrane ondulée pour être élastique de telle sorte que les deux pièces 2 et 3 sont solidaires mais il va de soi que l'on pourrait utiliser deux parties indépendantes munies d'organes de liaison de tous types connus.

De même, les organes de liaison des différentes parties assemblables, qu'il s'agisse du rebord courbe 10 et de la fente 8 ou des boutons à pression 25, 39 ou 40, peuvent être remplacés par tout autre organe connu.

Dans le cas où le marcottage se fait sur une branche verticale qu'il s'agisse du mode de réalisation de la figure 1 ou celui de la figure 4, lorsque l'on coupe la branche A après que les racines se soient développées dans la zone B à l'intérieur de la terre contenue dans le pot de marcottage, on obtient un plant, qui est déjà dans un pot et qui peut être manipulé très facilement et cela d'autant plus que la branche A doit être coupée au ras du fond du pot c'est-à-dire qu'aucun segment de branche ne doit dépasser.

Il en est de même, bien entendu, dans le cas des figures 5 et 6 mais si le pot permet de manipuler aisément les plants obtenus après coupure des branches celles-ci ne sont pas dans la position verticale qu'elles doivent normalement avoir lorsque les plants sont mis en pleine terre.

Il ressort de la decription ci-dessus qu'un pot de marcottage conforme à l'invention, apporte une très grande facilité de travail puisque sa mise en place est facile et qu'il permet en outre, d'effectuer le marcottage aérien de branches qu'il était actuellement impossible de marcotter avec les techniques connues.

Ce pot est donc appelé à favoriser grandement l'arboriculture et la multiplication des plants, qu'il s'agisse de feuillus ou de résineux.

REVENDICATIONS DE BREVET

1. Pot destiné au marcottage aérien de végétaux, du type comprenant un corps creux constitué d'au moins deux parties assemblables et éventuellement reliées l'une à l'autre afin de pouvoir être rapprochées et réunies en laissant subsister entre elles au moins une ouverture pour le passage d'une branche d'un végétal, caractérisé en ce qu'il comprend, en plus de ladite ouverture, deux éléments au moins susceptibles de coopérer par rapprochement, soit pour contribuer à l'assemblage de parties du pot, soit pour déterminer une ouverture pour le passage d'une branche d'un végétal déjà engagé dans la première ouverture.

2. Pot selon la revendication 1, caractérisé en ce qu'il comprend au moins deux parties reliées par une charnière et munies sur leurs bords libres, d'organes d'accrochage.

3. Pot selon la revendication 2, caractérisé en ce que la charnière est formée par une membrane qui est ondulée pour être élastique.

4. Pot selon l'une quelconque des revendications 2 et 3 ci-dessus, caractérisé en ce qu'il est constitué de deux moitiés sensiblement en forme de demi-tronc de cône réunies par une charnière selon une de leurs deux génératrices, munies d'organes d'accrochage près des autres génératrices et solidaires d'une part, à leur base de deux demi-fonds échancrés en leur centre et, d'autre part, à leur sommet de deux éléments radiaux se faisant face, toutes ces parties étant obtenues en une seule pièce par moulage d'une matière synthétique.

5. Pot selon la revendication 1, caractérisé en ce que les deux éléments sont constitués par des éléments radiaux dont les extrémités sont concaves et doivent se faire face, en regard d'une ouverture pour le passage d'une branche d'un végétal.

6. Pot selon la revendication 5, caractérisé en ce que les éléments radiaux ont une longueur telle qu'ils doivent s'incliner obliquement, à la manière d'arcs-boutants, lorsqu'une branche d'un végétal est interposée entre eux.

7. Pot selon la revendication 5, caractérisé en ce que les éléments radiaux sont munis d'organes d'accrochage afin de coopérer, soit l'un avec l'autre, soit avec une contrepartie solidaire du pot lui-même.

8. Pot selon la revendication 1, caractérisé en ce que les éléments susceptibles de coopérer par rapprochement sont constitués par les côtés d'une fente qui s'étend depuis l'extérieur d'une face du pot jusqu'à un trou de ladite face et qui est susceptible, par écartement élastique, de laisser le passage à une branche d'un végétal.

9. Pot selon la revendication 8, caractérisé en ce qu'il est constitué d'une partie centrale plane carrée solidaire par chacun de ses bords formant charnière, d'un panneau susceptible d'être amené dans un plan perpendiculaire à celui de la partie centrale et d'être maintenu ainsi par des organes de tout type connu tel que bouton à pression, afin de constituer un cube creux à cinq faces, la partie centrale et au moins deux autres panneaux opposés comprenant une fente et un trou.

10. Pot selon l'une quelconque des revendications 8 et 9, caractérisé en ce qu'il comprend au moins une pièce susceptible d'être placée au-dessus d'une fente et d'un trou en vue de les obturer.

11. Pot selon l'une quelconque des revendications 1 à 10 ci-dessus, caractérisé en ce qu'il comprend au moins une cuvette destinée à constituer un réservoir d'eau, par exemple, en association avec une nappe spongieuse.

12. Pot selon les revendications 4 et 11, caractérisé en ce que les deux demi-fonds sont munis de rebords radiaux et centraux afin de constituer deux cuvettes demi-circulaires échancrées en leur centre lorsque les fractions du pot sont en position de réunion.

13. Pot selon les revendications 4 et 11, caractérisé en ce qu'il doit recevoir deux cuvettes indépendantes demi-circulaires et dont la partie rectiligne est échancrée.

*Fig.1*

*Fig.2*

0021963

2/3

_Fig.3_

_Fig.4_

_Fig.5_

_Fig.6_

_Fig. 7_

0021963

Numéro de la demande

EP 80 40 0860

**Office européen des brevets**

## RAPPORT DE RECHERCHE EUROPEENNE

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | FR - A - 2 087 132 (VANSTEEN-KISTE) <br><br> * Totalité du brevet * <br><br> ---- | 1 | A 01 G 9/10 |

**DOMAINES TECHNIQUES RECHERCHES (Int. Cl. 3)**

A 01 G   9/10
9/00
1/00
7/00
17/00
17/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-09-1980 | HERYGERS |

OEB Form 1503.1   06.78